# EUROPÄISCHE PATENTANMELDUNG

(11) **EP 3 790 172 A1**
(43) Veröffentlichungstag der Anmeldung: **10.03.2021**
(21) Anmeldenummer: 20194012.9
(22) Anmeldetag: 02.09.2020
(51) Int. Cl.: H02K 5/04, H02K 5/02, H02K 5/167, H02K 7/08, H02K 9/22, H02K 15/14, H02K 41/03

(54) **ANTRIEBSVORRICHTUNG MIT EINEM TUBULAREN LINEARMOTOR UND EINER EDELSTAHLUMMANTELUNG**

(30) Priorität: 04.09.2019 EP 19195400
(71) Anmelder: NTI AG, 8957 Spreitenbach (CH)
(72) Erfinder: Rohner, Ronald, 8967 Widen (CH)
(74) Vertreter: Bohest AG

(57) **Zusammenfassung**

Bei einer Antriebsvorrichtung mit einem tubularen Linearmotor mit einem Stator (1), einem Läufer (2) sowie einem Bodenflansch (30) ist der Stator (1) auf dem Bodenflansch (30) in thermischem Kontakt mit dem Bodenflansch (30) angeordnet. Der Stator (1) ist flüssigkeitsdicht von Edelstahl umschlossen. Der Bodenflansch (30) besteht zumindest teilweise aus einem Material, das eine höhere thermische Leitfähigkeit als Edelstahl aufweist. Der Stator (1) ist zusammen mit dem Bodenflansch (30) von einer mit dem Bodenflansch (30) in thermischem Kontakt stehenden, den Bodenflansch (30) und den Stator (1) gemeinsam umschliessenden, Ummantelung (40) aus Edelstahl umschlossen. Der Stator (1) ist ein rohrförmiger Stator (1), mit darin angeordneten Antriebswicklungen (12) sowie mit einer Längsachse und einem Durchgangsloch (11), welches sich koaxial zur Längsachse durch den rohrförmigen Stator (1) hindurch erstreckt. Der Läufer (2) weist ein flüssigkeitdichtes Läuferrohr (21) aus Edelstahl auf, in welchem Permanentmagnete (23) angeordnet sind, und ist in Richtung der Längsachse in dem Durchgangsloch (11) relativ zum rohrförmigen Stator (1) bewegbar angeordnet. Der rohrförmige Stator (1) und der Bodenflansch (30) sind relativ zueinander so angeordnet, dass ein Teil des rohrförmigen Stators (1) mit dem Bodenflansch (30) in thermischem Kontakt steht.

## Beschreibung

Die vorliegende Erfindung betrifft eine Antriebsvorrichtung mit einem tubularen Linearmotor, einem Bodenflansch und einer Edelstahlummantelung.

Rotative Servomotoren und verschiedene Typen von Linearmotoren, insbesondere tubulare Linearmotoren, sind im Bereich der Handhabungstechnik und des allgemeinen Maschinenbaus, wie beispielsweise der Verpackungstechnik, der Lebensmittelverarbeitung oder des Sondermaschinenbaus, weit verbreitet. Aufgrund der geforderten Dynamik, Stellgüte und Leistungsdichte haben sich bei Linearmotoren ebenso wie bei den rotativen Servomotoren die permanentmagneterregten Synchronmotoren im industriellen Bereich durchgesetzt.

Die Lebensmittelindustrie, wobei darunter sowohl der Bereich der Verarbeitung als auch der Verpackung von Lebensmitteln zu subsummieren sind, wird zunehmend automatisiert. Einerseits erfolgt diese Automatisierung, um die Produktivität zu erhöhen, andererseits erfolgt sie, um die steigenden Anforderungen an die Hygiene zu erfüllen, die mit menschlicher Arbeitskraft oftmals entweder gar nicht oder nur mit grossem Aufwand zu erreichen ist. Gerade im Bereich der Milch-, Käse-, Fleisch- oder Geflügelverarbeitung müssen die Gerätschaften täglich mit aggressiven Reinigungsmitteln gesäubert und desinfiziert werden. Diese Reinigungsmittel wirken stark korrosiv sowohl auf normale Baustähle als auch auf Aluminium oder andere übliche Werkstoffe. Entsprechend wurden Verfahren der Oberflächenbehandlung eingeführt, welche einerseit der Belastung durch scharfe Reinigungsmittel bis zu einem gewissen Grade widerstehen können und andererseit eine hohe Lebensmittelverträglichkeit aufweisen. Dazu gehören unter anderem das Anodisieren von Aluminium, das chemische Vernickeln von Stahl oder der Einsatz von lebensmittelverträglichen Zweikomponenten-Lacken. All diesen Verfahren gemeinsam ist die Problematik, dass jeweils nur eine dünne Schicht an der Materialoberfläche die gewünschte Schutzwirkung aufweist. Sobald ein Kratzer bzw. eine Oberflächenbeschädigung auftritt, wird das darunterliegende Material durch die aggressiven Reinigungsflüssigkeiten angegriffen und es kann zu einer Kontaminierung der Lebensmittel kommen.

Aus diesem Grunde schreiben sowohl die Lebensmittel vearbeitende Industrie als auch der Gesetzgeber zunehmend kategorisch vor, dass sämtliche Oberflächen von Gerätschaften oder Komponenten, die in diesem Bereich zum Einsatz kommen, aus hochlegiertem Edelstahl ausgeführt sein müssen. Dabei ist zu beobachten, dass meistens nur noch Stähle der Werkstoffklassen 1.44xx und 1.45xx (Euro-Norm EN 10027-2) bzw. der Werkstoffe AISI 316 und AISI 316L (Norm AISI des American Iron and Steel Institute) akzeptiert werden. Bei weniger kritischen Anwendungen ist teilweise auch Edelstahl der Werkstoffklassen 1.43xx (Euro-Norm EN 10027-2) bzw. AISI 304 (Norm AISI) zugelassen. Im Folgenden sind unter dem Begriff Edelstahl immer solche Stähle zu verstehen, welche diesen Anforderungen entsprechen. Einzig Gleitflächen oder Gleitlager für die eingesetzten Linearmotoren dürfen aus lebensmitteltauglichen Kunststoffen (Polymerlager) realisiert werden. Entsprechende Materialianforderungen gelten natürlich auch für Stecker, Kabel, Kabelausgänge etc.

Ein tubularer Linearmotor umfasst einen rohrförmigen Stator (mit kreiszylindrischem Querschnitt) und einen in diesem in Längsrichtung in Linearlagern beweglich geführten Läufer (ebenfalls mit kreiszylindrischem Querschnitt). Der Stator umfasst elektrische Wicklungen, einen diese umhüllenden magnetischen Rückschluss aus Eisen und eine Positionssensorik für die Erfassung der Relativposition des Läufers zum Stator. Der Stator ist an seinen beiden Längsenden durch Abschlussflansche abgeschlossen, wobei der Läufer durch diese Abschlussflansche durchgeführt ist. Der Läufer umfasst ein (kreis-)zylindrisches Läuferrohr, in welchem eine Säule von Permanentmagneten angeordnet ist und das an seinen beiden Enden durch Endteile aus Edelstahl flüssigkeitsdicht abgeschlossen ist.

Hinsichtlich der Korrosionsbeständigkeit gegenüber Säuren oder Laugen ist der Läufer eines derartigen Linearmotors nahezu perfekt. Denn aus funktionstechnischen Gründen muss das Läuferrohr ohnehin aus einem nicht-magnetischen Edelstahl gefertigt sein.

Anders sieht dies beim Stator aus. Der Rückschluss des Linearmotors muss aus ferromagnetischem Eisen gefertigt sein. Grundsätzlich könnte man zwar auf den magnetischen Rückschluss aus Eisen verzichten, allerdings würde der Motor dann massiv an Leistungsstärke verlieren. Einfacher ist es, den bestehenden Stator eines tubularen Linearmotors direkt in ein Gehäuse aus Edelstahl einzubauen. Da tubulare Linearmotoren einen runden Querschnitt besitzen, kann als Gehäuse einfach ein entsprechend grosses Edelstahlrohr verwendet werden, in welches der Stator eingeschoben ist. Entsprechend müssen dann auch die Abschlussflansche an den beiden Statorenden aus Edelstahl gefertigt sein. Das Durchgangsloch für den Läufer des Linearmotors kann je nach Anforderung mit einem Spaltrohr aus Edelstahl oder Kunststoff ausgebildet sein. Derartig aufgebaute bzw. korrosionsgeschützte Linearmotoren sind seit etlichen Jahren bekannt und erfolgreich im Einsatz.

Ein wesentlicher Nachteil der Anordnung des tublaren Linearmotors in einem Edelstahlrohr besteht in den thermischen Eigenschaften, die sich aufgrund der Bauweise des Gehäuses bzw. des Motors ergibt. Bekanntlich hat jeder Elektromotor, so auch ein tubularer Linearmotor, im Betrieb eine Verlustleistung, welche in Form von Wärme freigesetzt wird. Der bei weitem grösste Teil dieser Verlustleistung wird durch die ohmschen Verluste in den Wicklungen des Motors erzeugt. Die Dauerleistung eines tubularen Linearmotors hängt direkt mit der Möglichkeit zusammen, diese Wärme von den Wicklungen in die Umgebung abzuführen. Ein Teil der Wärme wird über Luftkonvektion abgeführt. Das heisst, eine möglichst grosse Oberfläche des Motors (z.B. Kühlrippen eines Kühlkörpers) oder ein Kühlventilator wären prinzipiell von grossem Vorteil. In der Lebensmittelindustrie sind aber weder schlecht zu reinigende Kühlkörper noch Ventilatoren akzeptiert. Ebenso ist eine Flüssigkeitskühlung mittels Kühlschlangen, welche direkt in das Gehäuse des Linearmotors eingebaut werden, aufgrund des zusätzlichen Kühlkreislaufes in vielen Anwendungen nicht akzeptiert. Folglich muss der grösste Teil der Wärme über die direkte Anbindung des Linearmotors bzw. von dessen Stator an ein Maschinengestell abgeführt werden, an welchem der Linearmotor befestigt ist. Mit anderen Worten gesagt heisst das, dass man das Maschinengestell, an welchem der Linearmotor befestigt ist, als eigentlichen Kühlkörper verwendet.

Bei der Anordnung des tubularen Linearmotors in einem Edelstahlrohr ergibt sich aufgrund der zylinderförmigen Bauweise allerdings nur eine sehr kleine Oberfläche, die für die Kühlung durch Luftkonvektion zur Verfügung steht. Praktisch die gesamte Abwärme des Linearmotors muss also zunächst in Längsrichtung zu den Abschlussflanschen fliessen und wird dann - je nach Befestigungsart - noch über Befestigungsflansche zum Maschinengestell abgeleitet. Da sowohl das Rohr als auch die Abschlussflansche und etwaige Befestigungsflansche aus Edelstahl gefertigt sein müssen und Edelstahl eine sehr schlechte Wärmeleitfähigkeit aufweist, muss die Dauerleistung des Motors in der Grössenordnung von etwa 40% gegenüber einem nicht in Edelstahl eingekapselten Motor reduziert werden.

Bei einem wärmetechnisch verbesserten Aufbau eines tubularen Linearmotors ist der Stator des Linearmotors an der Unterseite über seine volle Länge auf einen Bodenflansch aus Edelstahl aufgesetzt. Eine Edelstahlabdeckung in Form eines dünnen Bleches ist von der Oberseite her über den Stator gelegt und mit dem Bodenflansch verschweisst. Die Abschlussflansche sind mit dem Bodenflansch und der Edelstahlabdeckung verschweisst und mit Dichtungen gegen innen abgedichtet. Der Einsatz einer Abdeckung in Form eines dünnen Edelstahlbleches (von der Oberseite her) hat gegenüber einem Edelstahlrohr den Vorteil, dass das Gesamtvolumen reduziert werden kann und wesentlich weniger teures Edelstahl benötigt wird. Wärmetechnisch ergibt sich der Vorteil, dass der Wärmefluss direkt über die gesamte Länge des Stators bzw. der Wicklungen durch den Bodenflansch in das Maschinengestell erfolgen kann. Damit wird eine sehr viel grössere Wärmeabgabe möglich als mit der zuvor beschriebenen Variante, bei welcher der Stator in ein Edelstahlrohr eingeschoben ist.

Allerdings ergibt sich dabei der Nachteil, dass der verwendete Bodenflansch aus Edelstahl sehr teuer und schwer ist. Und auch wenn die Wärmeleitung direkt und grossflächig vom Stator auf das Maschinengestell erfolgt, bleibt der Nachteil der schlechten Wärmeleitung von Edelstahl bestehen. Dies bedeutet, dass die Höhe des Bodenflansches und damit die Länge der Wärmewiderstandes durch den Bodenflansch so klein wie möglich sein sollte. Da der Bodenflansch allerdings über Befestigungsbohrungen (zur Befestigung des Linearmotors am Maschinengestell) verfügen soll, kann dessen Höhe bei der gleichzeitig angestrebten geringen Breite des Linearmotors nicht beliebig reduziert werden. Wenn nämlich die Höhe (Dicke) des Bodenflansches nicht gross genug ist, um Befestigungsbohrungen darin aufzunehmen, ist eine Montage des Linearmotors nur noch über die Abschlussflansche möglich. Eine derartige Befestigung nur über die Abschlussflansche an beiden Enden des Linearmotors bringt grosse konstruktive Einschränkungen mit sich und ist sehr unflexibel. Sie ist daher unerwünscht.

Unter Berücksichtung der vorstehenden Ausführungen ist es daher eine Aufgabe der vorliegenden Erfindung, eine Antriebsvorrichtung mit einem tubluaren Linearmotor, vorzuschlagen, der über eine verbesserte Ableitung der Wärme verfügt, der ein vergleichsweise geringeres Gewicht und geringere Material- und Fertigungskosten aufweist, und der hinsichtlich seiner Befestigungsmöglichkeiten keinen Beschränkungen unterliegt und absolut korrosionsbeständig ist.

Die erfindungsgemässe Antriebsvorrichtung, die diese Aufgabe löst, ist durch die Merkmale des unabhängigen Patentanspruchs charakterisiert. Vorteilhafte Aspekte der erfindungsgemässen Antriebsvorrichtung sind Gegenstand der abhängigen Patentansprüche.

Die erfindungsgemässe Antriebsvorrichtung umfasst einen tubularen Linearmotor mit einem Stator und einem Läufer, sowie einen Bodenflansch, wobei der Stator des tubularen Linearmotors auf dem Bodenflansch in thermischem Kontakt mit dem Bodenflansch angeordnet ist. Der Stator des tubularen Linearmotors ist flüssigkeitsdicht von Edelstahl umschlossen. Der Bodenflansch besteht zumindest teilweise aus einem Material, das eine höhere thermische Leitfähigkeit als Edelstahl aufweist. Der Stator des tubularen Linearmotors ist zusammen mit dem Bodenflansch von einer mit dem Bodenflansch in thermischem Kontakt stehenden, den Bodenflansch und den tubularen Linearmotor gemeinsam umschliessenden, Ummantelung aus Edelstahl umschlossen. Der Stator des tubularen Linearmotors ist einen rohrförmiger Stator, mit darin angeordneten Antriebswicklungen sowie mit einer Längsachse und einem Durchgangsloch, welches sich koaxial zur Längsachse durch den rohrförmigen Stator hindurch erstreckt. Der Läufer des tubularen Linearmotors weist ein flüssigkeitsdichtes Läuferrohr aus Edelstahl auf, in welchem Permanentmagnete angeordnet sind, und ist in Richtung der Längsachse in dem Durchgangsloch relativ zum rohrförmigen Stator bewegbar angeordnet. Der rohrförmige Stator und der Bodenflansch sind relativ zueinander so angeordnet, dass ein Teil des rohrförmigen Stators mit dem Bodenflansch in thermischem Kontakt steht.

Auf diese Weise ist der tubulare Linearmotor vollständig flüssigkeitsdicht ausgebildet, sodass weder innerhalb der Ummantelung aus Edelstahl noch innerhalb des Stators noch innerhalb des Läufers des tubularen Linearmotors Flüssigkeit vorhanden ist oder dort hinein eindringen kann. Gleichzeitig ist eine deutlich verbesserte Wärmeabfuhr gewährleistet. Diese vollständig flüssigkeitsdichte Ausbildung schliesst auch ein, dass die Lagerung des Läufers des tubularen Linearmotors derart ausgebildet ist, dass Flüssigkeit weder in den Innenraum der Ummantelung aus Edelstahl noch in den Stator oder in den Läufer des tubularen Linearmotors hinein eindringen kann, wodurch eine absolute Korrosionsbeständigkeit erreicht wird.

Gemäss einem Aspekt der erfindungsgemässen Antriebsvorrichtung kann diese zwei aus Edelstahl bestehende Abschlussflansche umfassen, die an den beiden Enden der Ummantelung angeordnet sind, wobei die Ummantelung mit den beiden Abschlussflanschen flüssigkeitsdicht verschweisst ist.

Gemäss einem weiteren Aspekt der erfindungsgemässen Antriebsvorrichtung ist die Ummantelung als Blech mit einer Dicke von 0.3 mm bis 0.7 mm (beispielsweise mit einer Dicke von 0.5 mm) ausgebildet. Dadurch ist eine gute Wärmeabfuhr bei gleichzeitig ausreichender Stabilität der Ummantelung gewährleistet.

Gemäss einem weiteren Aspekt der erfindungsgemässen Antriebsvorrichtung kann die Ummantelung aus zwei oder mehreren Abdeckungsteilen zusammengesetzt sein, die flüssigkeitsdicht miteinander verbunden sind (z.B. verschweisst). Dies erleichtert den Zusammenbau, da die zwei oder mehreren Abdeckungsteile zunächst separat aufgesetzt werden können und dann miteinander verbunden (z.B. verschweisst) werden können, um die Ummantelung zu bilden.

Gemäss einem weiteren Aspekt der erfindungsgemässen Antriebsvorrichtung kann das Material, aus dem der Bodenflansch zumindest teilweise besteht, eine Alumimium-Legierung sein. Diese besitzt eine hohe Wärmeleitfähigkeit, ist verhältnismässig leicht, und ist kostengünstig sowie einfach zu bearbeiten.

Gemäss einem weiteren Aspekt der erfindungsgemässen Antriebsvorrichtung kann im Bodenflansch mindestens ein Befestigungseinrichtung für die Montage der Antriebsvorrichtung an einem Montagegestell vorgesehen sein. Solche Befestigungseinrichtungen im Bodenflansch gewährleisten eine höhere Flexibilität bei der Montage der Antriebsvorrichtung an einem Montagegestell (Maschinengestell).

Gemäss einem weiteren Aspekt der erfindungsgemässen Antriebsvorrichtung kann die Ummantelung mindestens eine Öffnung und kann die mindestens eine Befestigungseinrichtung jeweils eine Bohrung im Bodenflansch aufweisen. Die jeweilige Öffnung in der Ummantelung ist koaxial zur jeweiligen Bohrung im Bodenflansch angeordnet. Die jeweilige Befestigungseinrichtung weist ferner eine in die Bohrung eingesetzte Gewindebuchse auf, welche sich durch die Öffnung in der Ummantelung hindurch in Bohrung hinein erstreckt und die Ummantelung flüssigkeitsdicht mit dem Bodenflansch verbindet. Auf diese Weise wird verhindert, dass aggressive Flüssigkeiten in die Ummantelung eindringen können.

Gemäss einem weiteren Aspekt der erfindungsgemässen Antriebsvorrichtung kann die Bohrung als Gewindebohrung mit einem Innengewinde ausgebildet sein, wobei die Gewindebuchse ein Aussengewinde aufweist und in die Bohrung eingeschraubt ist. Die Gewindebuchse weist einen konischen Kopf auf, der die Ummantelung flüssigkeitsdicht gegen den Bodenflansch presst. Dadurch wird eine besonders dichte Konstruktion erreicht.

Gemäss einem weiteren Aspekt der erfindungsgemässen Antriebsvorrichtung kann dabei die Öffnung in der Ummantelung konisch angesenkt sein.

Gemäss einem weiteren Aspekt der erfindungsgemässen Antriebsvorrichtung kann die Gewindebuchse mit dem Rand der Öffnung in der Ummantelung flüssigkeitsdicht verschweisst sein.

Gemäss einem weiteren Aspekt der erfindungsgemässen Antriebsvorrichtung kann die mindestens eine Befestigungseinrichtung jeweils eine mit einem Innengewinde versehene Bohrung im Bodenflansch aufweisen und kann die Ummantelung mindestens eine Öffnung aufweisen, wobei die jeweilige Öffnung koxial zur jeweiligen Bohrung angeordnet ist und einen grösseren Durchmesser aufweist als die jeweilige Bohrung, und wobei in der jeweiligen Öffnung ein Dichtring angeordnet ist, welcher die Ummantelung gegen den Bodenflansch flüssigkeitsdicht abdichtet.

Gemäss einem weiteren Aspekt der erfindungsgemässen Antriebsvorrichtung kann der Bodenflansch mehrere Abschnitte umfassen, die abwechslungsweise aus Edelstahl bzw. aus dem Material bestehen, welches eine höhere thermische Leitfähigkeit aufweist als Edelstahl. Die Ummantelung ist mit den aus Edelstahl bestehenden Abschnitten des Bodenflansches flüssigkeitsdicht verschweisst. In den aus Edelstahl bestehenden Abschnitten des Bodenflansches ist jeweils mindestens eine Bohrung angeordnet, die mit einem Innengewinde versehen ist. Dadurch ist die Befestigung der Antriebsvorrichtung an einem Montagegestell (z.B. Maschinengestell) besonders einfach zu realisieren.

Gemäss einem weiteren Aspekt der erfindungsgemässen Antriebsvorrichtung kann der Edelstahl ein rostfreier Stahl mit der Werkstoffbezeichnung 1.43xx, 1.44xx oder 1.45xx (Euro-Norm EN 10027-2) sein. Dies gilt für sämtliche Teile der erfindungsgemässen Antriebsvorrichtung, die aus Edelstahl bestehen.

Gemäss einem weiteren Aspekt der erfindungsgemässen Antriebsvorrichtung kann derjenige Teil des Bodenflanschs, der aus der Aluminium-Legierung besteht, aus einem gezogenen Profil aus der Aluminium-Legierung hergestellt sein. Dies ist herstellungstechnisch besonders einfach, da der Bodenflansch von einem solchen gezogenen Profil schlicht dadurch hergestellt werden kann, dass von einem solchen Profil die für den Bodenflansch erforderliche Länge von dem Profil(teil) abgeschnitten werden kann. Als Profil kann beispielsweise ein gezogenes Profil aus der Aluminum-Legierung AlMgSi0.5 mit der Werkstoffbezeichnung EN AW-6060 T66 (EN=Euro-Norm) verwendet werden. Eine andere Werkstoffbezeichung hierfür ist 3.3206 (Aluminium Association).

Im Folgenden sind Ausführungsbeispiele der Erfindung anhand der Zeichnung beschrieben. Es zeigen:
- Fig. 1: einen Längsschnitt durch ein erstes Ausführungsbeispiel einer erfindungsgemässen Antriebsvorrichtung mit einem tubularen Linearmotor;
- Fig. 2: einen Querschnitt durch die Antriebsvorrichtung der Fig. 1 senkrecht zur Längsachse;
- Fig. 3-6: Detailskizzen eines Ausführungsbeispiels der Befestigungseinrichtung einer erfindungsgemässen Antriebsvorrichtung;
- Fig. 7-9: Detailskizzen eines weiteren Ausführungsbeispiels der Befestigungseinrichtung einer erfindungsgemässen Antriebsvorrichtung;
- Fig. 10-11: Detailskizzen eines weiteren Ausführungsbeispiel der Befestigungseinrichtung einer erfindungsgemässen Antriebsvorrichtung; und
- Fig. 12: einen Längsschnitt durch ein ein weiteres Ausführungsbeispiel der erfindungsgemässen Antriebsvorrichtung mit einem tubularen Linearmotor.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen. Als Edelstahl kommt bei den beschriebenen Ausführungsbeispielen nicht-magnetischer rostfreier Stahl mit der Werkstoffbezeichnung 1.43xx, 1.44xx und 1.45xx (Euro-Norm EN 10027-2) bzw. mit der Werkstoffbezeichnung AISI 304, AISI 316 und AISI 316L (nach der Norm AISI des American Iron and Steel Institute) zum Einsatz.

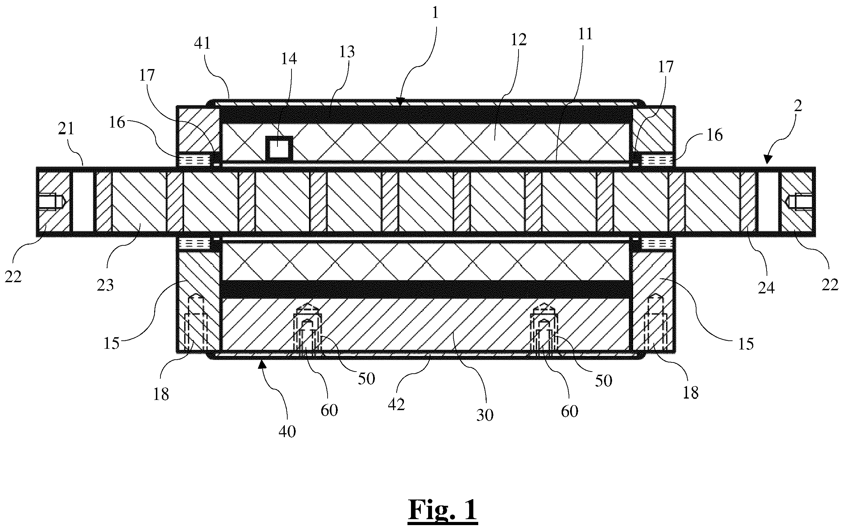

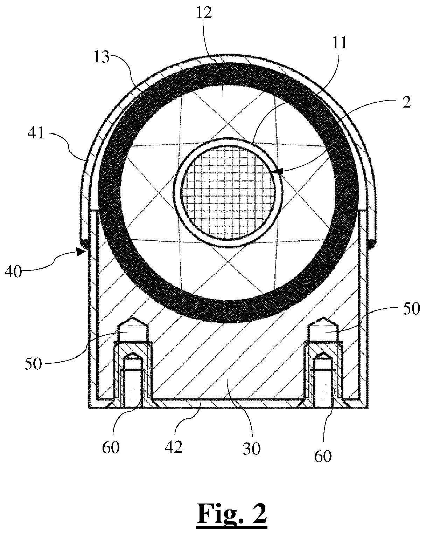

Der in **Fig. 1** **und** **Fig. 2** gezeigte tubulare Linearmotor der erfindungsgemässen Antriebsvorrichtung umfasst einen Stator 1 und einen Läufer 2. Der Stator 1 ist ein rohrförmiger Stator mit einem koaxialen Durchgangsloch 11 und umfasst Antriebswicklungen 12, einen die Antriebswicklungen umhüllenden EisenRückschluss 13 sowie eine Postionssensorik 14.

Der Läufer 2 umfasst ein Läuferrohr 21 aus Edelstahl, das an seinen beiden Enden jeweils durch ein Endteil 22 aus Edelstahl flüssigkeitsdicht verschlossen ist. Im Inneren des Läuferrohrs 21 sind Permanentmagnete 23 und Abstandshalter, z.B. in Form von Eisenscheiben 24, angeordnet.

An den beiden Längsenden des Stators 1 sind zwei ebenfalls aus Edelstahl bestehende Abschlussflansche 15 befestigt, in welchen jeweils ein Lineargleitlager 16 angeordnet ist, das jeweils mittels einer Dichtung 17 gegenüber dem Inneren des Stators 1 flüssigkeitsdicht abgedichtet ist. Zudem sind die beiden Abschlussflansche 15 mit Gewindebohrungen 18 versehen, die als Befestigungsmöglichkeiten der Antriebsvorrichtung an einem hier nicht dargestellten Maschinengestell dienen können.

Der Läufer 2 ist in den Lineargleitlagern 16 in Richtung der Längsachse des Stators 1 relativ zum Stator 1 beweglich gelagert, wobei die Relativposition des Läufers 2 zum Stator 1 von der Positionssensorik 14 erfasst wird. Elektrische Anschlüsse für die Wicklungen 12 und die Positionssensorik 14 sowie eine Steuerung für den tubularen Linearmotor spielen für das Verständnis der Erfindung keine Rolle und sind aus Gründen der besseren Übersichtlichkeit nicht dargestellt.

Prinzipiell kann der Läufer 2 auch extern gelagert werden (z.B. mit Hilfe von Führungsstangen einer H-Führung), so dass die Gleitlager 16 prinzipiell entfallen können bzw. als Notgleitlager mit einem grösseren Durchmesser ausgelegt werden können.

Anstelle der beiden Lineargleitlager 16 oder zusätzlich zu diesen kann die Innenfläche des Durchgangslochs 11 des Stators 1 als polymere Gleitfläche ausgebildet sein. Der Vorteil der Gleitlager 16 liegt darin, dass diese ausgetauscht werden können.

Alternativ kann in den Stator 1 auch ein Spaltrohr aus Edelstahl eingefügt sein. Dieses ist dann jeweils mit den Abschlussflanschen 15 dicht verbunden, beispielsweise durch eine Schweissverbindung. Der Läufer 2 ist dann innerhalb von diesem Spaltrohr in Linearlagern gelagert und berührt das Spaltrohr selbst nie. Entsprechend ist dann der Luftspalt zwischen den Antriebswicklungen 12 und dern Permanentmagneten 23 im Läufer 2 etwas grösser bzw. der Durchmesser des Läufers etwas reduziert.

Soweit entspricht der dargestellte tubulare Linearmotor in Aufbau und Funktionsweise bekannten tubularen Linearmotoren, so dass zum weiteren Aufbau und der Funktionsweise eines solchen tubularen Linearmotors der Fachmann keine weiteren Erläuterungen benötigt.

Bei dem tubularen Linearmotor der erfindungsgemässen Antriebsvorrichtung ist ein Teil des rohrförmigen Stators 1 mit seinem rohrförmigen Eisenrückschluss 13 auf einem Bodenflansch 30 gelagert, wobei die Kontur der Innenfläche des Bodenflanschs 30 an die äussere Kontur des Eisenrückschlusses 13 angepasst ist, so dass ein guter thermischer Kontakt zwischen diesen beiden Teilen besteht. Der Bodenflansch 30 besteht in diesem Ausführungsbeispiel aus einem einheitlichen Block aus einem Material, das eine höhere thermische Leitfähigkeit als Edelstahl aufweist, leichter bearbeitbar ist als Edelstahl und ein geringeres Gewicht aufweist als Edelstahl. Vorzugsweise besteht der Bodenflansch 30 aus einer Aluminium-Legierung mit hoher thermischer Leitfähigkeit. Eine geeignete Aluminium-Legierung ist z.B. die bereits weiter oben genannte Aluminum-Legierung AlMgSi0.5 mit der Werkstoffbezeichnung EN AW-6060 T66 (EN=Euro-Norm) bzw. mit der Werkstoffbezeichnung 3.3206 (Aluminium Association). Der Bodenflansch 30 erstreckt sich zwischen den beiden Abschlussflanschen 15 über die gesamte Länge des Stators 1 bzw. dessen Eisenrückschlusses 13. Der Bodenflansch kann auch zwei oder mehrere aneinander gereihte Blockteile umfassen. Aus thermischer Sicht wäre zwar zum Beispiel Kupfer zu bevorzugen, allerdings sind das höhere Gewicht, die schwerere Bearbeitbarkeit und die höheren Kosten von Kupfer im Vergleich zu einer Aluminium-Legierung nachteilig.

Das spezifische Gewicht von Edelstahl ist etwa drei Mal grösser als dasjenige von Aluminium und etwa fünf bis sechs Mal grösser als dasjenige von üblichen Kunststoffen. Die Wärmeleitfähigkeit einer Aluminium-Legierung ist etwa zehn bis fünfzehn Mal grösser als diejenige von Edelstahl. Und schliesslich liegen die Material- und Bearbeitungskosten eines Teils aus Edelstahl um ein Vielfaches höher, als wenn das Teil aus einer Aluminium-Legierung oder aus Kunststoff gefertigt wird.

Der Eisenrückschluss 13 des Stators 1 der erfindungsgemässen Antriebsvorrichtung ist gemeinsam mit dem Bodenflansch 30 von einer Ummantelung 40 in Form eines Blechs aus Edelstahl umschlossen. Die Ummantelung 40 ist mit den beiden Abschlussflanschen 15 (ebenfalls aus Edelstahl) flüssigkeitsdicht verschweisst, so dass der gesamte tubulare Linearmotor flüssigkeitsdicht eingekapselt ist. Aus Gründen der einfacheren Herstellbarkeit kann die Edelstahlummantelung 40 zweiteilig mit einem oberen Abdeckungsteil 41 und einem unteren Abdeckungsteil 42 ausgebildet sein, wobei der obere Abdeckungsteil 41 mit dem unteren Abdeckungsteil 42 flüssigkeitsdicht verschweisst ist. Grundsätzlich kann anstelle einer Verschweissung auch eine andere (korrosionsfeste) Verbindungstechnik eingesetzt werden. Die Verschweissung mit den Abschlussflanschen 15 erfolgt dabei nach der Verschweissung der beiden Abdeckungsteile 41 und 42 miteinander. Die Wandstärke der Ummantelung 40 bzw. die Dicke des dafür eingesetzten Edelstahl-Blechs soll wegen der schlechten Wärmeleitfähigkeit von Edelstahl möglichst klein sein, aber dennoch eine ausreichende Festigkeit der Ummantelung gewährleisten. Bevorzugte geeignete Blechdicken liegen im Bereich von beispielsweise 0.3-0.7 mm (sie kann beispielsweise 0.5 mm betragen).

Im Folgenden wird auf die Befestigungseinrichtung der erfindungsgemässen Antriebsvorrichtung an einem Maschinengestell oder einer Montageplatte oder dergleichen näher eingegangen.

Grundsätzlich kann die erfindungsgemässe Antriebsvorrichtung mittels der in den Abschlussflanschen 15 vorgesehenen Gewindebohrungen 18 am Maschinengestell befestigt werden. Aus Sicht des Anwenders ist dies jedoch vielfach sehr ungünstig und es sind Montagepunkte im Bereich zwischen den beiden Abschlussflanschen 15 erwünscht oder sogar erforderlich.

Eine einfache Bohrung durch den dünnwandigen unteren Abdeckungsteil 42 der Ummantelung 40 in den Bodenflansch 30 hinein (dort im Bodenflansch 30 z.B. mit einem Innengewinde) hätte allerdings zur Folge, dass Reinigungsflüssigkeit durch die Bohrung in der Ummanetlung 40 hindurch auf den Bodenflansch 30 treffen könnte und der Bodenflansch 30, da er nicht aus Edelstahl gefertigt ist, korrodieren würde. Zwischen dem unteren Abdeckungsteil 42 und dem Bodenflansch 30 entstünde eine Trennfläche, die eine kapillare Wirkung zeigt, so dass Reinigungsflüssigkeit durch die Bohrung in der Ummantelung 40 hindurch zwischen das dünnwandige Abdeckungsteil 42 und den Bodenflansch 30 geradezu hineingezogen wird und so eine Zerstörung des Motors zur Folge hätte.

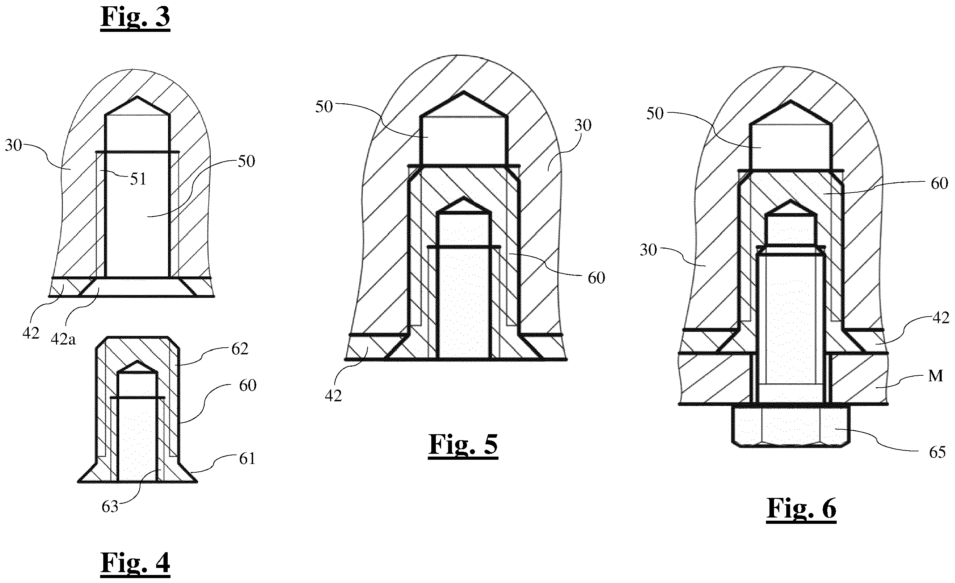

In einem Ausführungsbeispiel der Befestigungseinrichtung der erfindungsgemässen Antriebsvorrichtung gemäss den Fig. 3 - Fig. 6 sind durch Öffnungen 42a im unteren Abdeckungsteil 42 der (Edelstahl-)Ummantelung 40 hindurch im Bodenflansch 30 (eine oder mehrere) Bohrungen 50 mit Innengewinde 51 **(****Fig. 3****)** vorgesehen, wobei diese Bohrungen 50 im Bodenflansch 30 jeweils koaxial zu den Öffnungen 42a in der (Edelstahl-)Ummantelung 40 angeordnet sind. In die Bohrungen 50 mit Innengewinde ist jeweils eine Gewindebuchse 60 aus Edelstahl - wie sie in **Fig. 4** gezeigt ist - eingesetzt, wie aus **Fig. 5** ersichtlich. Die Bohrungen 50 bilden zusammen mit den in sie eingesetzten Gewindebuchsen 60 Befestigungseinrichtungen für die Montage der Antriebsvorrichtung an dem Maschinengestell. Die Gewindebuchsen 60 bestehen aus Edelstahl und weisen einen konischen Kopf 61 auf. Die Gewindebuchsen 60 verfügen je über ein Aussengewinde 62 und ein Innengewinde 63, wobei das Aussengewinde 62 zu dem Innengewinde 51 der Bohrungen 50 im Bodenflansch 30 passt. Aus **Fig. 6** ist zu erkennen, wie die Antriebsvorrichtung mittels einer in eine Gewindebuchse 60 eingeschraubten Schraube 65 an dem Maschinengestell M befestigt ist. Diese Schraube 65 besteht vorzugsweise ebenfalls aus Edelstahl.

Zum Einsetzen einer Gewindebuchse wird als erstes eine zylindrische Bohrung 50 durch den unteren Abdeckungsteil 42 der (Edelstahl-)Ummantelung 42 hindurch in den Bodenflansch 30 hinein gebohrt und sodann in die Bohrung im Bodenflansch ein Innengewinde 51 geschnitten. Das Aussengewinde 62 der Gewindebuchse 60 passt genau zu diesem Innengewinde 51 der Bohrung 50. Anschliessend wird die Öffnung 42a in der (Edelstahl-)Ummantelung 40 entsprechend der Form des Kopfs 61 der Gewindebuchse 60 konisch angesenkt, vorteilhafterweise mit einem Öffnungswinkel von insgesamt 90° (Grad). Anschliessend wird die Gewindebuchse 60 mit einer flüssigen Schraubensicherung (Gewindeklebstoff) unlösbar bis zum Anschlag des konischen Endes der Gewindebuchse 60 an der Ansenkung der Öffnung 42a in dem unteren Abdeckungsteil 42 der Ummantelung 40 eingeschraubt. Zum Einschrauben der Gewindebuchse 60 kann eine Hilfsschraube oder ein geeignetes Werkzeug dienen, welches in das innere Gewinde 63 der Gewindebuchse 60 hineingeschraubt wird, oder es kann eine entsprechende Aufnahme, zum Beispiel ein Innensechskant innerhalb der Gewindebuchse 60 vorgesehen sein (nicht dargestellt). Aufgrund des konischen Kopfes 61 der Gewindebuchse 60 ergibt sich durch die Anpressung des konischen Kopfes 61 gegen den unteren Abdeckungsteil 42 der (Edelstahl-)Ummantelung 40 im Bereich der Bohrung 50 ein flüssigkeitsdichter Abschluss zwischen der Ummantelung 40 und dem Bodenflansch 30. Diese Anpressung ist auch dann gewährleistet, wenn das Innengewinde 63 in der Gewindebuchse 60 offen ist und nicht mit einer Schraube an einem Maschinengestell oder einer Montageplatte angeschraubt ist. Im Vergleich zu dem nachstehend beschriebenen Ausführungsbeispiel, bei dem die Gewindebuchsen eingeschweisst sind, ergibt sich bei dieser Variante der grosse Vorteil, dass auf eine Lasernahtschweissung verzichtet werden kann und auch Gewinde an Stellen angebracht werden können, die von einem Schweisslaser nicht erreicht werden können.

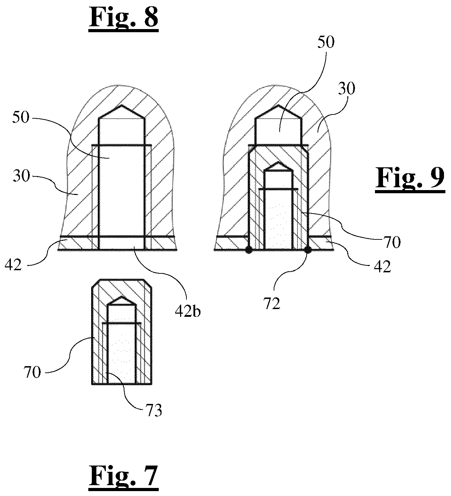

In Fig. 7-9 ist ein weiteres Ausführungsbeispiel der Befestigungseinrichtung der erfindungsgemässen Antriebsvorrichtung dargestellt, bei welchem Gewindebuchsen 70 aus Edelstahl mit einem Innengewinde 73 - wie in **Fig. 7** dargestellt - durch Öffnungen 42b im unteren Abdeckungsteil 42 der (Edelstahl-)Ummantelung 40 in Bohrungen 50 im Bodenflansch 30 - wie in **Fig. 8** dargestellt - eingesetzt sind. Der eingesetzte Zustand, also der Zustand in dem die Gewindebuchse 70 in die Bohrung 50 eingesetzt ist, ist aus **Fig. 9** ersichtlich. Die Bohrungen 50 bilden zusammen mit den eingesetzten Gewindebuchsen 70 Befestigungseinrichtungen für die Montage der erfindungsgemässen Antriebsvorrichtung an einem Maschinengestell oder eine Montageplatte oder dergleichen. Dabei können die Gewindebuchsen 70 in die Bohrungen 50 eingeklebt oder eingeklemmt sein. Die Bohrungen 50 können auch als Gewindebohrungen mit Innengewinde ausgebildet sein, wobei die Gewindebuchsen 70 dann mit einem passenden Aussengewinde versehen sind und in die Bohrungen eingeschraubt sind. Die Gewindebuchsen 70 sind jeweils mittels z.B. Laser-Schweissung flüssigkeitsdicht mit dem Rand der Öffnungen 42b im unteren Abdeckungsteil 42 verschweisst, wobei eine absolut flüssigkeitsdichte Verbindung zwischen den Gewindebuchsen 70 und dem unteren Abdeckungsteil 42 der (Edelstahl-)Ummantelung gewährleistet ist. Diese Schweissnaht 72 ist in Fig. 9 angedeutet. Der tubulare Linearmotor kann so ohne weitere Vorkehrungen oder Dichtungsringe am Maschinengestell montiert oder auch wieder vom Maschinengestell demontiert werden, wobei die Dichtwirkung auch ohne Montageschraube oder Montagewerkzeug bestehen bleibt. Allerdings ist hier eine Nahtschweissung erforderlich mit anschliessender Nachbearbeitung.

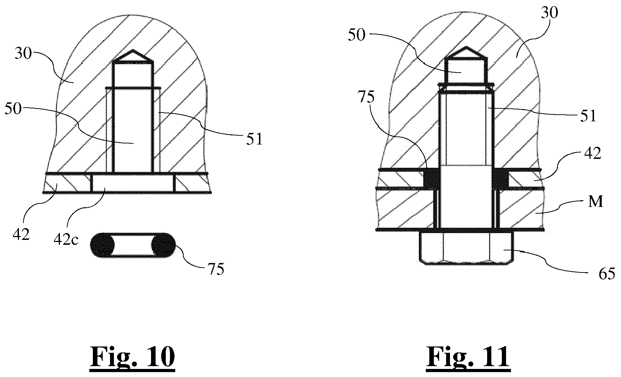

In Fig. 10 und Fig. 11 ist ein weiteres Ausführungsbeispiel der Befestigungseinrichtung der erfindungsgemässen Antriebsvorrichtung dargestellt. Bei diesem Ausführungsbeispiel sind im Bodenflansch 30 erneut eine oder mehrere Bohrungen 50 mit Innengewinde 51 vorgesehen, und der untere Abdeckungsteil 42 der (Edelstahl-)Ummantelung 40 weist eine entsprechende Anzahl Öffnungen 42c auf, deren (Innen-)Durchmesser grösser ist als der (Innen-)Durchmesser der Bohrungen 50, wie dies aus **Fig. 10** zu erkennen ist. In jede Öffnung 42c ist ein Dichtungsring 75 (O-Ring) eingesetzt, wie er ebenfalls in Fig. 10 zu erkennen ist, wobei der in die Öffnung 42c eingesetzte Dichtungsring 75 (O-Ring) in **Fig. 11** dargestellt ist. Bei der Befestigung der Antriebsvorrichtung am Maschinengestell M mittels einer Befestigungsschraube 65 aus Edelstahl wird der Dichtungsring 75 gequetscht und dichtet dabei den unteren Abdeckungsteil 42 der EdelstahlUmmantelung 40 gegen den Bodenflansch 30 ab. Alternativ könnten die Öffnungen mit dem grösseren (Innen-)Durchmesser prinzipiell auch im Maschinengestell M vorgesehen und die Dichtungsringe in diesen Öffnungen im Maschinengestell M angeordnet sein. Die Dichtwirkung tritt aber nur ein, wenn die Antriebsvorrichtung an der Montageplatte 43 fest angeschraubt ist. Diese Art der Abdichtung eignet sich daher in der Praxis nicht so gut, wenn einzelne Gewindebohrungen ungenutzt bleiben oder für Einsatzzwecke, bei denen die Befestigungsschrauben wieder gelöst werden müssen.

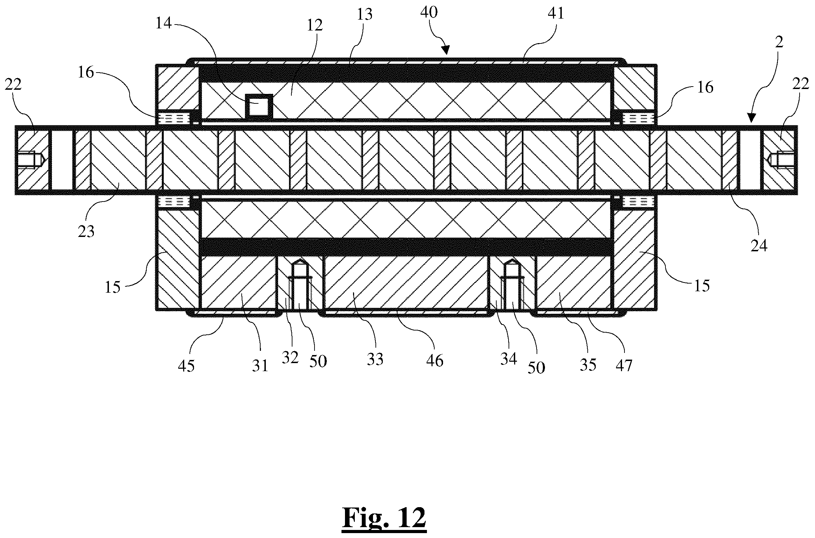

**Fig. 12** zeigt ein Ausführungsbeispiel der erfindungsgemässen Antriebsvorrichtung, bei dem das Problem der Befestigung der Antriebsvorrichtung am Maschinengestell auf eine andere Weise gelöst ist. Der hier dargestellte tubulare Linearmotor unterscheidet sich von dem in Fig.1 und Fig. 2 dargestellten tubularen Linearmotor lediglich durch die Art und Weise, wie der Bodenflansch und die (Edelstahl-) Ummantelung ausgebildet sind. Alle übrigen Teile sind gleich.

In diesem Ausführungsbeispiel umfasst der Bodenflansch fünf Flanschteile 31, 32, 33, 34 und 35, die zwischen den beiden Abschlussflanschen 15 in Längsrichtung des tubularen Linearmotors hintereinander angeordnet sind. Die längeren Flanschteile 31, 33 und 35 des Bodenflanschs bestehen wie beim Ausführungsbeispiel aus Fig. 1 und Fig. 2 aus einer thermisch gut leitenden Aluminium-Legierung, während die zwischen diesen längeren Flanschteilen 31, 33 und 35 angeordenten kürzeren Flanschteile 32 und 34 aus Edelstahl bestehen. Der untere Abdeckungsteil der (Edelstahl-)Ummantelung umfasst drei (Ummantelungs-)Abschnitte 45, 46 und 47, welche einerseits die aus der Aluminium-Legierung bestehenden Flanschteile 31, 33 und 35 umschliessen und anderseits die aus Edelstahl bestehenden Flanschteile 32 bzw. 34 teilweise überlappen. Dabei umschliesst der mittlere (Ummantelungs-) Abschnitt 46 den Flanschteil 33 des Bodenflanschs, der aus der Aluminium-Legierung besteht, und überlappt teilweise die beiden aus Edelstahl bestehenden Flanschteile 32 und 34 des Bodenflanschs, mit denen der (Ummantelungs-)Abschnitt 46 jeweils flüssigkeitsdicht verschweisst ist. Der eine äussere (Ummantelungs-) Abschnitt 45, der ebenfalls aus Edelstahl besteht, umschliesst den Flanschteil 31 des Bodenflanschs, der aus der Aluminium-Legierung besteht, und überlappt teilweise sowohl den einen aus Edelstahl bestehenden Abschlussflansch 15 als auch den aus Edelstahl bestehenden Flanschteil 32 des Bodenflanschs. Dieser eine äussere (Ummantelungs-)Abschnitt 45 ist sowohl mit diesem Abschlussflansch 15 als auch mit dem Flanschteil 32 des Bodenflanschs flüssigkeitsdicht verschweisst. Der entsprechende andere äussere (Ummantelungs-)Abschnitt 47, der ebenfalls aus Edelstahl besteht, umschliesst den Flanschteil 35 des Bodenflanschs, der aus der Aluminium-Legierung besteht, und überlappt teilweise sowohl den anderen aus Edelstahl bestehenden Abschlussflansch 15 als auch den aus Edelstahl bestehenden Flanschteil 34 des Bodenflansches. Dieser andere äussere (Ummantelungs-)Abschnitt 47 ist sowohl mit diesem anderen Abschlussflansch 15 als auch mit dem Flanschteil 34 verschweisst. In den aus Edelstahl bestehenden Flanschteilen 32 und 34 des Bodenflanschs sind Bohrungen 50 mit Innengewinde angebracht, die als Befestigungseinrichtungen für die Antriebsvorrichtung dienen. Da die Flanschteile 32 und 34 aus Edelstahl mit ausreichender Dicke bestehen, können hier problemlos Gewindebohrungen vorgesehen werden. Anstelle einer Unterteilung des unteren Abdeckungsteils der (Edelstahl-)Ummantelung in drei Abschnitte kann der untere Abdeckungsteil auch aus einem einzigen Abschnitt bestehen, wobei dann allerdings im Bereich der Befestigungseinrichtung Öffnungen in dieser Ummantelung vorgesehen sein müssen und die Ränder dieser Öffnungen mit den aus Edelstahl bestehenden Flanschteilen 32 und 34 des Bodenflanschs flüssigkeitsdicht verschweisst oder anderweitig abgedichtet sein müssen.

Bei dem Ausführungsbeispiel gemäss Fig. 12 ist die Wärmeableitung gegenüber einem Ausführungsbeispiel mit einem gänzlich aus einer Aluminium-Legierung bestehenden Bodenflansch zwar etwas verringert, dafür ist die Realisierung der Befestigungseinrichtung etwas einfacher. Im Interesse einer möglichst guten Wärmeableitung sowie eines geringen Gewichts und geringerer Materialkosten ist die Länge der aus Edelstahl bestehenden Flanschteile 32 und 34 möglichst kurz und gerade gross genug, um die Gewindebohrungen sicher aufnehmen zu können. Selbstverständlich kann der Bodenflansch auch nur einen einzigen Flanschteil aus Edelstahl oder auch mehr als zwei Flanschteile aus Edelstahl aufweisen.

Die Erfindung wurde vorstehen anhand von Ausführungsbeispielen beschrieben, ist aber nicht auf diese Ausführungsbeispiele beschränkt. Vielmehr sind Änderungen oder Modifikationen möglich, die im Bereich des Wissens eines Fachmanns liegen und die daher von der technischen Lehre umfasst sind, die der Erfindung zugrunde liegt. Der Schutzbereich wird somit von den nachfolgenden Ansprüchen definiert.

## Patentansprüche

1. Antriebsvorrichtung mit einem tubularen Linearmotor mit einem Stator (1) und einem Läufer (2), sowie mit einem Bodenflansch (30), wobei der Stator (1) des tubularen Linearmotors auf dem Bodenflansch (30) in thermischem Kontakt mit dem Bodenflansch (30) angeordnet ist, und wobei der Stator (1) des tubularen Linearmotors (1) flüssigkeitsdicht von Edelstahl umschlossen ist, wobei ferner der Bodenflansch (30) zumindest teilweise aus einem Material besteht, das eine höhere thermische Leitfähigkeit als Edelstahl aufweist, und wobei der Stator (1) des tubularen Linearmotors zusammen mit dem Bodenflansch (30) von einer mit dem Bodenflansch (30) in thermischem Kontakt stehenden, den Bodenflansch (30) und den Stator (1) des tubularen Linearmotors gemeinsam umschliessenden, Ummantelung (40) aus Edelstahl umschlossen ist, wobei der Stator (1) des tubularen Linearmotors ein rohrförmiger Stator ist, mit darin angeordneten Antriebswicklungen (12) sowie mit einer Längsachse und einem Durchgangsloch (11), welches sich koaxial zur Längsachse durch den rohrförmigen Stator hindurch erstreckt, und wobei der Läufer (2) des tubularen Linearmotors ein flüssigkeitsdichtes Läuferrohr (21) aus Edelstahl aufweist, in welchem Permanentmagnete (23) angeordnet sind, wobei der Läufer (2) in Richtung der Längsachse in dem Durchgangsloch (11) relativ zum rohrförmigen Stator (1) bewegbar angeordnet ist, und wobei der rohrförmige Stator (1) und der Bodenflansch (30) relativ zueinander so angeordnet sind, dass ein Teil des rohrförmigen Stators (1) mit dem Bodenflansch (30) in thermischem Kontakt steht.

2. Antriebsvorrichtung nach Anspruch 1, welche weiterhin zwei aus Edelstahl bestehende Abschlussflansche (15) umfasst, die an den beiden Enden der Ummantelung (40) angeordnet sind, wobei die Ummantelung (40) mit den beiden Abschlussflanschen (15) flüssigkeitsdicht verschweisst ist.

3. Antriebsvorrichtung nach Anspruch 1 oder 2, wobei die Ummantelung (40) als Blech mit einer Dicke von 0.3 mm - 0.7 mm ausgebildet ist.

4. Antriebsvorrichtung nach einem der vorangehenden Ansprüche, wobei die Ummantelung (40) aus zwei oder mehreren Abdeckungsteilen (41, 42; 41, 45, 46, 47) zusammengesetzt ist, die flüssigkeitsdicht miteinander verbunden sind.

5. Antriebsvorrichtung nach einem der vorangehenden Ansprüche, wobei das Material, aus dem der Bodenflansch (30) zumindest teilweise besteht, eine Alumimium-Legierung ist.

6. Antriebsvorrichtung nach einem der vorangehenden Ansprüche, wobei im Bodenflansch (30) mindestens eine Befestigungseinrichtung(50; 50, 60; 50, 70) für die Montage der Antriebsvorrichtung an einem Montagegestell (M) vorgesehen ist.

7. Antriebsvorrichtung nach Anspruch 6, wobei die Ummantelung (40) mindestens eine Öffnung (42a; 42b) und die mindestens eine Befestigungseinrichtung jeweils eine Bohrung (50) im Bodenflansch (30) aufweist, wobei die jeweilige Öffnung (42a; 42b) in der Ummantelung (40) koaxial zur jeweiligen Bohrung (50) im Bodenflansch (30) angeordnet ist, und wobei die jeweilige Befestigungseinrichtung eine in die Bohrung (50) eingesetzte Gewindebuchse (60; 70) aufweist, welche sich durch die Öffnung (42a; 42b) in der Ummantelung (40) hindurch in die Bohrung (50) hinein erstreckt und die Ummantelung (40) flüssigkeitsdicht mit dem Bodenflansch (30) verbindet.

8. Antriebsvorichtung nach Anspruch 7, wobei die Bohrung (50) als Gewindebohrung mit einem Innengewinde (51) ausgebildet ist, wobei die Gewindebuchse (60) ein Aussengewinde (62) aufweist und in die Bohrung (50) eingeschraubt ist, und wobei die Gewindebuchse (60) einen konischen Kopf (61) aufweist, der die Ummantelung (40) flüssigkeitsdicht gegen den Bodenflansch (30) presst.

9. Antriebsvorrichtung nach Anspruch 8, wobei die Öffnung (42a) in der Ummantelung (40) konisch angesenkt ist.

10. Antriebsvorrichtung nach Anspruch 7, wobei die Gewindebuchse (70) mit dem Rand der Öffnung (42b) in der Ummantelung (40) flüssigkeitsdicht verschweisst ist.

11. Antriebsvorrichtung nach Anspruch 6, wobei die mindestens eine Befestigungseinrichtung jeweils eine mit einem Innengewinde (51) versehene Bohrung (50) im Bodenflansch (30) aufweist und die Ummantelung (40) mindestens eine Öffnung (42c) aufweist, wobei die jeweilige Öffnung (42c) koaxial zur jeweiligen Bohrung (50) angeordnet ist und einen grösseren Durchmesser aufweist als die jeweilige Bohrung (50), und wobei in der jeweiligen Öffnung (42c) ein Dichtring (75) angeordnet ist, welcher die Ummantelung (40) gegen den Bodenflansch (30) flüssigkeitsdicht abdichtet.

12. Antriebsvorrichtung nach einem der Ansprüche 1-6, wobei der Bodenflansch mehrere Abschnitte (31, 32, 33, 34, 35) umfasst, die abwechslungsweise aus Edelstahl bzw. aus dem Material bestehen, welches eine höhere thermische Leitfähigkeit aufweist als Edelstahl, wobei die Ummantelung (40) mit den aus Edelstahl bestehenden Abschnitten (32, 34) des Bodenflansches flüssigkeitsdicht verschweisst ist, und wobei in den aus Edelstahl bestehenden Abschnitten (32, 34) des Bodenflansches jeweils mindestens eine Bohrung (50) angeordnet ist, die mit einem Innengewinde versehen ist.

13. Antriebsvorrichtung nach einem der vorangehenden Ansprüche, wobei der Edelstahl ein rostfreier Stahl mit der Werkstoffbezeichnung 1.43xx, 1.44xx oder 1.45xx ist.

14. Antriebsvorrichtung nach Anspruch 5, wobei derjenige Teil des Bodenflanschs, der aus der Aluminium-Legierung besteht, aus einem gezogenen Profil aus der Aluminium-Legierung hergestellt ist.
